(19) **Europäisches Patentamt**
**European Patent Office**
**Office européen des brevets**

(11) **EP 2 796 671 A1**

(12) **EUROPÄISCHE PATENTANMELDUNG**

(43) Veröffentlichungstag:
**29.10.2014 Patentblatt 2014/44**

(51) Int Cl.:
*F01K 3/12* (2006.01)  *F01K 3/18* (2006.01)
*F01K 13/02* (2006.01)  *F28D 20/00* (2006.01)

(21) Anmeldenummer: **13165605.0**

(22) Anmeldetag: **26.04.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder:
• **Lenk, Uwe**
**08064 Zwickau (DE)**
• **Tremel, Alexander**
**91052 Erlangen (DE)**

(54) **Kraftwerkssystem mit thermochemischem Speicher**

(57) Die Erfindung betrifft ein Kraftwerksystem (1), umfassend eine Wärmeerzeugungseinheit (10) zur Bereitstellung von thermischer Energie, einen Wasser-Dampf-Kreislauf (20), welcher mit der Wärmeerzeugungseinheit (10) wärmetechnisch verschaltet ist, eine Stromerzeugungseinrichtung (30), welche durch die in dem Wasser-Dampf-Kreislauf (20) geführte thermische Energie zur Stromerzeugung energetisiert werden kann, sowie einen thermochemischen Speicher (40), welcher mit dem Wasser-Dampf-Kreislauf (20) ebenfalls wärmetechnische verschaltet ist.

FIG 2

EP 2 796 671 A1

**Beschreibung**

Die vorliegende Erfindung betrifft ein Kraftwerkssystem mit einer Wärmeerzeugungseinrichtung zur Bereitstellung von thermischer Energie sowie einen dazugehörigen Wasserdampfkreislauf, der mit der Wärmeerzeugungseinheit wärmetechnisch verschaltet ist. Weiter betrifft die vorliegende Erfindung ein Verfahren zum Betrieb eines solchen Kraftwerkssystems.

Die Leistungsflexibilität von Kraftwerken bestimmt sich u.a. durch das zeitliche und leistungstechnische Verhalten bei Laständerungsvorgängen. Solche sind typischerweise Anfahr-, Abfahrvorgänge, wie auch Änderungen zur Schaltung in einen Teillastbetrieb. Insbesondere etwa bei kombinierten Gas- und Dampfturbinenkraftwerken (GuD) ist das erzielbare Laständerungsverhalten für einen flexiblen Betrieb eine bestimmende technische Größe, die darüber entscheidet, ob und inwieweit das Kraftwerk für Netzwerkstabilisierungsmaßnahmen eingesetzt werden kann. Bei solchen Gas- und Dampfturbinenkraftwerk ist typischerweise die Gasturbine verhältnismäßig schnell anfahrbar bzw. es sind schnelle Laständerungswechsel vollführbar (in einem zeitlichem Größenordnungsbereich von Minuten). Jedoch beschränken vor allem thermische Grundanforderungen, wie beispielsweise die Einhaltung von thermischen und zeitlichen Gradienten in dem Wasser-Dampf-Kreislauf, die zu unerwünschten mechanischen Spannungen beitragen können, die Geschwindigkeit von Laständerungswechsel im Dampfteil des Kraftwerks. Vergleichbare Einschränkungen können sich beispielsweise auch bei anderen Kraftwerkstechnologien (z.B. Fossile Verbrennungskraftwerke, Biomassekraftwerke, usw.) einstellen, bei welchen die Laständerungsgeschwindigkeiten durch die thermischen Grundvoraussetzungen eines Wasser-Dampf-Kreislaufs beschränkt sind.

Um diesen Nachteil aus dem Stande der Technik zu beheben, werden teilweise die Nutzung von thermischen Speichern vorgesehen, mittels welcher thermische Energie zeitlich zwischengespeichert werden kann, wobei die Energie dann bei erhöhter Nachfrage kurzfristig zur Verfügung gestellt werden kann.

Ein Beispiel für einen solchen technischen Ansatz ist etwa in der Patentanmeldung WO 2012/150969 A1 beschrieben, in welcher ein thermischer Speicher mit einer Gasturbine zum verbessert flexiblen Einsatz beschrieben ist. Hierbei wird etwa der thermische Speicher mit Wärme beladen zu Zeiten, zu welchen von einer Gasturbine eine nur geringe Stromerzeugungsleistung nachgefragt wird. Zu einem anderen Zeitpunkt jedoch, bei welchem etwa eine erhöhte Nachfrage nach elektrischer Energie vorliegt, kann diese in dem thermischen Speicher zwischengespeicherte Energie kurzfristig abgerufen werden, um sie in einem Rückverstromungsverfahren wieder in elektrische Energie zu überführen.

Derartige thermische Speicher eignen sich insbesondere für eine thermische Unterstützung des Anfahrens eines kombinierten Gas- und Dampfturbinenkraftwerks, nachdem im Bereich des Wasser-Dampf-Kreislaufs bereits eine Abkühlung erfolgt ist. Muss nach einer solchen Abkühlung beispielsweise wiederum elektrische Leistung durch das Kraftwerk zur Verfügung gestellt werden, kann dem Dampfteil aus dem thermischen Energiespeicher zusätzlich Wärme zugeführt werden, um ein schnelleres Anfahren des Gesamtkraftwerks zu ermöglichen. Derartige thermische Speicher sind auf der Basis der Technologie von sensiblen Wärmespeichern oder Latentwärmespeichern ausgeführt.

Nachteilig an diesen aus dem Stand der Technik bekannten Ansätzen ist jedoch, dass mittels dieser Speichertechnologien nur verhältnismäßig geringe thermische Energiedichten dem Kraftwerk im Falle einer Laständerung zugeführt bzw. abgeführt werden können. Um dennoch hohe Energiedichten zu erreichen wären verhältnismäßig große sensible Wärmespeicher oder Latentwärmespeicher erforderlich, die einen unerwünscht hohen Platzbedarf und Investitionsbedarf erfordern.

Weiterhin nachteilig an den aus dem Stand der Technik bekannten Lösungsansätzen ist das aufgrund einer hohen Verlustleistung thermische Energie etwa bei längeren Stillstandszeiten des Kraftwerks ohne Nutzung verloren geht. Insbesondere aufgrund der hohen Temperaturniveaus, auf welchen die thermische Energie typischerweise zwischengespeichert wird, führt die thermische Speicherung zu einer hohen Verlustleistung.

Ebenso als nachteilig erweist sich bei den herkömmlichen, im Kraftwerksbereich eingesetzten thermischen Energiespeichern eine nur ungenügende Kontrolle über die Menge der aus dem thermischen Speicher entnommenen Energie. Meist erfordert dies eine komplizierte Strömungsführung, um die zeitlichen Temperaturanforderungen erfüllen zu können.

Um diese aus dem Stand der Technik bekannten Nachteile zu vermeiden, ist es technisch erforderlich, ein Kraftwerkssystem vorzuschlagen, welches insbesondere eine erhöhte thermische Energiedichte bei Zwischenspeicherung von thermischer Energie ermöglicht. Weiterhin ist es wünschenswert, eine verbessert kontrollierte Entnahme von Wärme bei Bedarf zu erlauben. Zudem soll auch der thermische Verlust bei Stillstandszeiten im Vergleich zu den aus dem Stand der Technik bekannten Lösungen vermindert werden.

Erfindungsgemäß werden diese der vorliegenden Erfindung zugrundeliegenden Aufgaben durch ein Kraftwerkssystem gemäß Anspruch 1 sowie durch ein Verfahren zu Betrieb eines solchen Kraftwerkssystems gemäß Anspruch 13 gelöst.

Insbesondere werden diese der Erfindung zugrunde liegenden Aufgaben durch ein Kraftwerkssystem gelöst werden, welches eine Wärmeerzeugungseinheit zur Bereitstellung von thermischer Energie umfasst, einen Wasser-Dampf-Kreislauf, welcher mit der Wärmeerzeugungseinheit wärmetechnisch verschaltet ist, eine Stromerzeugungseinrichtung, welche durch die in dem Wasser-Dampf-Kreislauf geführte thermische Energie zur Stromerzeugung energetisiert werden kann, sowie einen thermochemischen Speicher, welcher mit dem Wasser-Dampf-Kreislauf ebenfalls wärmetechnisch verschaltet ist.

Weiter werden diese der Erfindung zugrunde liegenden Aufgaben durch ein Verfahren zum Betrieb eines solchen, wie auch nachfolgend beschriebenen Kraftwerkssystems gelöst, welches folgende Schritte umfasst:

- Laden des thermochemischen Speichers durch Zuführen von Wärme auf einem ersten Temperaturniveau T1 an den thermochemischen Speicher;
- Zeitliches Speichern wenigstens eines Teils dieser Wärme in dem thermochemischen Speicher in chemischer Form;
- Entladen des thermochemischen Speichers auf einem zweiten Temperaturniveau T2 und Abführen von Wärme aus diesem unter Übertragung von Wärme an den Wasser-Dampf-Kreislauf.

Ausführungsgemäß ist die Wärmeerzeugungseinheit typischerweise als Gasturbine, als Feuerungsraum eines mit synthetischen oder auch fossilen Brennstoffen betriebenen Kraftwerks oder auch als Kernreaktor eines Kernkraftwerks ausgebildet.

Vorliegend soll der Wasser-Dampf-Kreislauf zudem in seiner allgemeinen Bedeutung verstanden werden. Insbesondere umfasst der Wasser-Dampf-Kreislauf damit alle Bauteile etwa eines Abhitzedampferzeugers, die dazugehörigen Rohrleitungen sowie Anschlüsse und Ableitungen an der Stromerzeugungseinrichtung.

Die erfindungsgemäße Stromerzeugungseinrichtung ist bevorzugt als eine mit einem Generator versehene Dampfturbine ausgebildet, welche mittels der thermischen Energie aus dem Dampf in dem Wasser-Dampf-Kreislauf betrieben werden kann (= energetisiert werden kann).

Die vorliegende Erfindung sieht vor, einen thermochemischen Speicher zur Zwischenspeicherung von thermischer Energie in ein Kraftwerk zu integrieren. Im Vergleich zu herkömmlichen in der Kraftwerkstechnik angewandten thermischen Speichern, Latentwärmespeicher und sensible Wärmespeicher, weist ein thermochemischer Wärmespeicher eine deutlich höhere Speicherdichte auf. Thermochemische Speicher nutzen hierbei typischerweise einen physikalischen und/oder chemischen Sorptionsvorgang bzw. eine chemische Reaktion (meist zwischen Feststoff und Gas bzw. zwischen Flüssigkeit und Gas) um thermische Energie zeitlich speichern zu können. Hierbei kann beispielsweise eine in den thermochemischen Speicher eingeleitete Wärmemenge dazu genutzt werden, etwa einen Desorptionsvorgang zwischen zwei Reaktanden voranzutreiben, um beider wieder zu trennen. Die daraus erhaltenen freien Reaktionsprodukte befinden sich nun etwa auf einem höheren Energieniveau, wodurch die so eingebrachte Wärmemenge in Form von chemischer Energie zwischengespeichert werden kann. Wird infolge einer angefragten Ausspeicherung von thermischer Energie etwa eine erneute Rekombination der freien Reaktionsprodukte in dem thermochemischen Speicher ausgelöst, wird wieder thermische Energie frei. Diese dabei frei werdende thermische Energie kann nun zur Abfuhr aus dem thermochemischen Speicher und zur weiteren Nutzung in dem Kraftwerkssystem vorgesehen werden. Die im Rahmen der Speichervorgänge ablaufenden chemischen bzw. physikalischen Reaktionen sind hierbei reversibel, so dass es zu keinem Verbrauch Reaktionspartner kommt.

Bei einer thermochemischen Wärmespeicherung unterliegen die dabei ablaufenden Reaktionen Reaktionspartner im Normalfall einer Temperatur- und Druckabhängigkeit. Diese Einflüsse bestimmen auch, auf welcher Seite das chemische Gleichgewicht der Reaktionen liegt. Ein solches chemisches Gleichgewicht lässt sich etwa nach Gleichung I folgendermaßen formulieren:

$$F + \nu G \iff FG_\nu \qquad\qquad \text{(Gleichung I)}$$

Hierbei stellt F einen Feststoff dar, G ein Gas und FG ein Reaktionsprodukt von beiden. Alternativ kann F auch eine Flüssigkeit sein, die etwa mit einem Gas reagiert.

Die freie Reaktionsenthalpie ΔG sowie die Gleichgewichtskostante der chemischen Gleichgewichtsreaktion K, weisen den folgenden Zusammenhang gemäß Gleichung II auf:

$$\Delta G = - RT \ln K \qquad\qquad \text{(Gleichung II)}$$

Hierbei ist R die allgemeine Gaskonstante sowie T die Temperatur. Die freie Reaktionsenthalpie ΔG kann in Abhängigkeit der Reaktionsenthalpie ΔH sowie der Änderung der Entropie ΔS gemäß Gleichung III bestimmt werden:

$$\Delta G = \Delta H - T\Delta S \qquad\qquad \text{(Gleichung III)}$$

Drückt man nun die Gleichgewichtkonstante K entsprechend dem Massenwirkungsgesetz im Sinne von Gleichung IV aus, lässt sich die Gleichgewichtskonstante K aus den relativen Partialdrücken des Gleichgewichtszustands der Reaktion nach Gleichung I folgendermaßen näherungsweise bestimmen:

$$K = \frac{p_G^{\nu}}{p_0^{\nu}} \qquad \text{(Gleichung IV)}$$

Hierbei wurden die Aktivitäten des Gases vereinfacht als deren Partialdrücke angenommen, wobei die Aktivität eines Feststoffes 1 ist. $p_0$ ist weiterhin der Normaldruck des Reaktionsgases. Aufgrund der obigen Verhältnisse ergibt sich damit folgender Zusammenhang gemäß Gleichung V:

$$\ln \frac{p_G^{\nu}}{p_0^{\nu}} = \frac{\Delta S}{R} - \frac{\Delta H}{RT} \qquad \text{(Gleichung V)}$$

Da die Größen $\Delta S$ und $\Delta H$ allgemein nur schwach temperaturabhängig sind, ergibt damit etwa eine graphische Auftragung des logarithmischen Partialdrucks des Reaktionsgases $p_G$ gegen $-\left(\dfrac{1}{T}\right)$ eine Gerade.

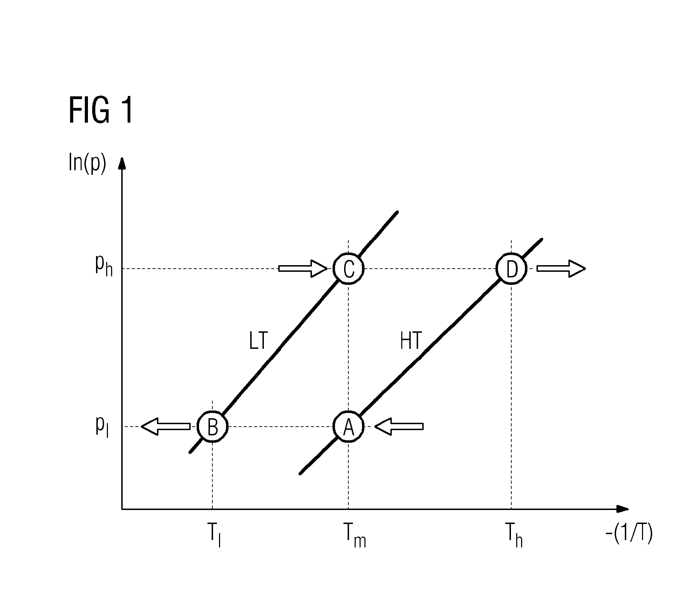

Eine beispielhafte Auftragung zweier unterschiedlicher, jedoch miteinander gekoppelter Reaktionen (LT-Reaktion, für Low Temperature Reaktion, und HT-Reaktion, für High-Temperature-Reaktion) ist etwa in FIG 1 dargestellt. Gemäß der dort wiedergegebenen Reaktionsverläufe wird etwa durch Zufuhr von Wärme auf einem mittleren Temperaturniveau $T_m$ die Dissoziation eines Ausgangsstoffs gemäß der HT-Reaktion erreicht (Punkt A). Das hierbei freiwerdende gasförmige Reaktionsprodukt kann in einer anderen Reaktion (LT-Reaktion) nun erneut reagieren. Da bei dieser zweiten Reaktion wiederum Wärme frei wird, ist eine Wärmeabfuhr erforderlich, um das Temperaturniveau auf einem Wert $T_l$ zu halten, der die zweite Reaktion erlaubt (Punkt B). Beide Reaktionen erfolgen auf dem Druckniveau $p_l$ und führen zu einer Einspeicherung von Energie, da die Reaktionsenthalpie $\Delta H$ der HT-Reaktion typischerweise höher ist als die Reaktionsenthalpie $\Delta H$ der LT-Reaktion. Die Wärmezufuhr an Punkt A gemäß FIG 1 ist hierbei betragsmäßig größer als die notwendige Wärmeabfuhr an Punkt B.

Die Ausspeicherung von thermischer Energie aus diesem gekoppelten System erfolgt im Wesentlichen umgekehrt. Wird dem Reaktionsprodukt der LT-Reaktion nun erneut Wärme auf dem Temperaturniveau $T_m$ zugeführt, erfolgt eine Dissoziation dieses Reaktionsproduktes (Punkt C). Hierbei stellt sich das Druckniveau $p_h$ ein. Die Reaktion des dabei frei werdenden, gasförmigen Reaktionsprodukts aus der LT-Dissoziationsreaktion zusammen mit dem Ausgangsprodukt der HT-Reaktion (etwa ein Feststoff, welcher nach der Dissoziation bei Punkt A zurück geblieben ist) führt zu einer Wärmefreisetzung auf einem höheren Temperaturniveau $T_h$ (Punkt 4). Die Temperaturfreisetzung gemäß dieser Reaktion erfolgt also auf einem Temperaturniveau $T_h$, welches höher als die zuvor beschriebenen Temperaturniveaus $T_m$ und $T_l$ ist. Da wiederum die Reaktionsenthalpie $\Delta H$ der HT-Reaktion typischerweise größer ist als die der LT-Reaktion, ist die freigesetzte Wärmemenge an dem Punkt D größer als die notwendige Wärmezufuhr bei Punkt C der LT-Reaktion.

Gemäß der in FIG 1 dargestellten Reaktionsabfolge erfolgt die Wärmezufuhr an den Punkten A und C bei einem vergleichbaren mittleren Temperaturniveau $T_m$. Dies stellt einen Spezialfall dar, da allgemein diese Wärmezufuhren auch auf unterschiedlichen Temperaturniveaus erfolgen können.

Eine Auswahl geeigneter Reaktionspartner kann aufgrund der Berechnung der Gleichgewichtslage sowie der jeweiligen Reaktionsenthalpien $\Delta H$ vorgenommen werden. Beispielsweise Auswahlmöglichkeiten an geeigneten Reaktionspaaren werden weiter unten, bspw. in Tabelle I, noch im Einzelnen aufgeführt.

Durch die Verschaltung eines thermochemischen Speichers in dem erfindungsgemäßen Kraftwerkssystem kann, wie oben schon ausgeführt, Wärme auf unterschiedlichen Temperaturniveaus in die Kraftwerksprozesse eingebunden werden. Auch dies erlaubt eine erhöhte Flexibilisierung des Kraftwerkssystems.

Weiter zeichnet sich ein thermochemischer Speicher etwa im Vergleich zur sensiblen Speicherung oder zur Latentwärmespeicherung durch eine verhältnismäßig höhere Energiedichte aus. Dadurch kann ein thermochemischer Speicher vergleichsweise kleiner, also unter geringerem Raumbedarf ausgebildet werden. Bei vergleichbarem Raumbedarf ist die gespeicherte Energiemenge eines thermo-chemischen Speichers folglich im Umkehrschluss höher.

Da die Wärmespeicherung in einem thermochemischen Speicher zudem in Form von chemischen Stoffen stattfindet, kann die in einen thermochemischen Speicher eingespeicherte Wärmemenge auch über einen verhältnismäßig langen Zeitraum nahezu verlustfrei gespeichert werden. So können auch nach längerer Stillstandzeit des Kraftwerks die bevorrateten Stoffe für ein verbessertes Anfahren im Wesentlichen vollständig wieder zur Verfügung gestellt werden.

Weiterhin erweist sich die Einbindung eines thermochemischen Speichers in das Kraftwerkssystem auch insofern als vorteilhaft, als auch Abwärme aus anderen Prozessen (z.B. Rücklauf aus dem Fernwärmenetz, Abwärme aus Industrieprozessen) eingebunden werden kann. Gerade bei physikalischen Desorptionsprozessen kann auch Wärmezufuhr auf einem verhältnismäßig niedrigem Temperaturniveau zu einer ausreichenden Dissoziationsrate führen. Das Einbinden von Wärmequellen auf geringeren Temperaturniveaus und das Freisetzen der Wärme auf einem höheren Temperaturniveau (wie zu FIG 1 erläutert) kann auch als chemische Wärmpumpe begriffen werden, die besonders energieeffizient arbeitet.

Gemäß einer vorteilhaften Ausführungsform der Erfindung ist der thermochemische Speicher der Wärmeerzeugungseinheit hinsichtlich eines Abgasstromes aus dieser nachgeschaltet. Insofern kann der thermochemische Speicher Abwärme aus dem Abgasstrom zu Einspeicherung aufnehmen und diese in chemischer bzw. physikalischer Form (also im Sinne von frei werdenden Stoffen) zwischenspeichern. Besonders bevorzugt ist der thermochemische Speicher mit einer Abgasleitung verschaltet, die ebenfalls mit der Wärmeerzeugungseinheit gekoppelt ist. Ausführungsgemäß kann der thermochemische Speicher auch parallel zu einer Teilleitung der Abgasleitung in diese Abgasleitung, also in eine weitere Teilleitung der Abgasleitung, verschaltet sein. Eine derartige Verschaltung ermöglicht die Einspeicherung von thermischer Energie in den thermochemischen Speicher bei Bedarf, erlaubt jedoch auch thermische Energie an dem thermochemischen Speichern vorbeizuführen. Derartige Ausführungsformen erhöhen die Flexibilität des Kraftwerkssystems.

Gemäß einer besonders bevorzugten Ausführungsform des erfindungsgemäßen Kraftwerkssystems ist vorgesehen, dass auch die Wärmeerzeugungseinheit wärmetechnisch mit dem thermochemischen Speicher verschaltet ist. Insbesondere kann die Verschaltung auch fluidtechnisch erfolgen. Durch die Verschaltung kann Wärme der Wärmeerzeugungseinheit genutzt werden, um den thermochemischen Speicher aufzuladen, damit er zu einem späteren Zeitpunkt erneut zur Wärmeabgabe zur Verfügung stehen kann. Insbesondere erfolgt bei Betrieb des Kraftwerkssystems eine Versorgung des thermochemischen Speichers zur Aufladung mit Wärme auf einem Temperaturniveau von wenigstens 200°C, bevorzugt von wenigstens 350°C und ganz besonders bevorzugt auf einem Temperaturniveau von wenigstens 500°C. Derartige Temperaturniveaus sind geeignet, in einem thermochemischen Speicher typisch ablaufende Reaktionen voranzubringen. Zu einer genaueren Darstellung der spezifischen Temperaturen sei auf die jeweiligen Reaktionen in Tabelle I verwiesen, die ausführungsgemäß vorliegend auch beansprucht werden.

**Tabelle 1:**

| Reaktion | Temperatur |
|---|---|
| $Cu(OH)_2 \leftrightarrow CuO + H_2O$ | 10-200 |
| $MgSO_4 \cdot 7H_2O \leftrightarrow MgSO_4 + 7H_2O$ | 50 - 150 |
| $CuSO_4 \cdot 5H_2O \leftrightarrow CuSO_4 + 5H_2O$ | 120 - 160 |
| $ZnCO_3 \leftrightarrow ZnO + CO_2$ | 100 - 150 |
| $MgCO_3 \leftrightarrow MgO + CO_2$ | 250 - 550 |
| $CaCO_3 \leftrightarrow CaO + CO_2$ | 800 - 950 |
| $Mg(OH)_2 \leftrightarrow MgO + H_2O$ | 150 - 350 |
| $Ca(OH)_2 \leftrightarrow CaO + H_2O$ | 250 - 550 |
| $Ba(OH)_2 \leftrightarrow BaO + H_2O$ | 700 - 800 |
| $BaO_2 \leftrightarrow BaO + \frac{1}{2} O_2$ | 750 - 850 |
| $2KO_2 \leftrightarrow K_2O + \% O_2$ | 600 - 800 |

Gemäß einer weiteren vorteilhaften Ausführungsform der Erfindung ist vorgesehen, dass der thermochemische Speicher wenigstens zwei Behältnisse aufweist, die fluidtechnisch miteinander verschaltet sind, wobei in einem ersten Behältnis ein thermochemisches Speichermaterial angeordnet ist. Derartige Speichermaterialen sind wiederum beispielsweise in Tabelle I aufgeführt. Bevorzug sind beide Behältnisse über wenigstens eine Rohrleitung, speziell über einen Kreislauf, miteinander fluidtechnisch verschaltet. Weiterhin kann zur Unterstützung der Zirkulation in einer solchen Verschaltung auch ein Inertgas in den Behältnissen vorgesehen sein, welches etwa durch einen Strömungsgenerator, beispielsweise einen Lüfter, zwischen den Behältnissen bewegt werden kann. Das erste Behältnis kann entsprechend einer bevorzugten Ausführungsform der Erfindung auch mit einem von dem Wasser-Dampf-Kreislauf umfassten Abhitzedampferzeuger verschaltet sein. Gemäß dieser Ausführungsform kann auf eine Unterstützung der Zirkulation zwischen den beiden Behältnissen durch einen Strömungsgenerator zwischen den beiden Behältnissen verzichtet werden. Der Aufbau des thermochemischen Speichers unter Vorsehen von zwei Behältnissen ermöglicht eine kontrollierte Auf- und Entladung des Speichers. Insbesondere erlauben die Behältnisse bei Unterbrechung der fluidtechnischen Verbindung bzw. bei Vorliegen von geeigneten Reaktionsbedingungen die langzeitige Zwischenspeicherung von thermischer Energie in chemischer bzw. physikalischer Form.

Entsprechend einer weiteren bevorzugten Ausführungsform der Erfindung ist vorgesehen, dass das in dem ersten Behältnis angeordnete thermochemische Speichermaterial ein Metalloxid und/oder ein Metallhydroxid umfasst. Insbesondere soll das Metalloxid als Magnesiumoxid, Calciumoxid, Bariumoxid, Kupferoxid bzw. das Metallhydroxid als Magnesiumhydroxid, Calciumhydroxid, Bariumhydroxid oder Kupferhydroxid ausgebildet sein. Alternativ oder auch zusätzlich können auch Metallcarbonate oder Metallsulfate als Speichermaterialien vorgesehen sein. Ebenso sind Hydrate insbesondere von Chloriden als Speichermaterial denkbar (siehe auch Tabelle 1), welche durch Wärmezufuhr dehydratisiert werden können. Auch die Oxidation und Reduktion von Metalloxiden eignet sich, um ein geeignetes Speichermaterial zur Verfügung zu stellen. Hier wäre etwa die Reaktion von Mangan-IV-Oxid zu Mangan-III-Oxid und umgekehrt durch (Luft-)Sauerstoff denkbar. Weitere geeignete Stoffe können etwa aus Tabelle I entnommen werden. Derartige Stoffe erlauben die Bereitstellung eines weitgehend ungefährlich zu handhabenden, wie auch kostengünstigen Speichermaterials. Gemäß einer Weiterführung dieser Idee kann auch vorgesehen sein, dass auch in dem zweiten Behältnis ein thermochemisches Speichermaterial angeordnet ist, wobei insbesondere das in dem zweiten Behältnis angeordnete thermochemische Speichermaterial nicht identisch ist mit dem in dem ersten Behältnis angeordneten thermochemischen Speichermaterial. Insbesondere umfasst auch das in dem zweiten Behältnis angeordnete thermochemische Speichermaterial wiederum ein Metalloxid und/oder ein Metallhydroxid. Bevorzugt soll das Metalloxid als Magnesiumoxid, Calciumoxid, Bariumoxid, Kupferoxid bzw. das Metallhydroxid als Magnesiumhydroxid, Calciumhydroxid, Bariumhydroxid oder Kupferhydroxid ausgebildet sein. Alternativ oder auch zusätzlich können auch Stoffe vorgesehen sein, wie sie etwa als thermochemisches Speichermaterial für das erste Behältnis weiter oben beschrieben wurden.

In einer weiteren vorteilhaften Weiterbildung dieser Ausführungsform ist vorgesehen, dass in dem zweiten Behältnis eine Kältesenke vorgesehen ist, deren Kälteleistung bei Betrieb des thermochemischen Speichers insbesondere erlaubt, dampfförmiges Wasser zu kondensieren. Insbesondere ist diese Kältesenke als Wärmetauscher ausgebildet bzw. mit einem solchen wärmetechnisch verschaltet, damit etwa die Kondensationswärme abgeführt werden kann. Alternativ kann auch Reaktionswärme abgeführt werden, falls eine chemische bzw. physikalische Reaktion im zweiten Behältnis zur Wärmefreisetzung führt. In einer weiteren Ausführungsform kann auch die Kältesenke mit einem Niedertemperaturwärmespeicher wärmetechnisch verschaltet sein, so dass etwa die freiwerdende Wärme darin zeitlich zwischengespeichert werden kann. Zur Nutzung dieser freiwerdenden Wärme kann diese auch im Bereich eines Niederdruckteils des Wasser-Dampf-Kreislaufs eingekoppelt werden.

Zudem kann auch vorgesehen sein, dass zwischen den beiden Behältnissen ein Strömungsgenerator, insbesondere ein Lüfter fluidtechnisch verschaltet ist. Der Strömungsgenerator ist in der Lage, die Reaktionsrate durch Zirkulation eines an der Reaktion teilnehmenden Gases bzw. Fluids voranzutreiben und damit zur Freisetzung von größeren Wärmemengen beitragen.

Während der Zeit der Zwischenspeicherung befindet sich gemäß einer bevorzugten Ausführungsform im zweiten Behältnis typischerweise kondensiertes Wasser, welches zum Entladen des thermochemischen Speichers wieder wenigstens teilweise verdampft werden muss, um anschließend dem ersten Behältnis zugeführt werden zu können. Zur Verdampfung dieses Wassers kann wiederum Wärme aus einem Wärmespeicher, bzw. aus einer Niedertemperaturquelle wie etwa dem Fernwärmenetzwerk entnommen werden. Diese Ausführungsform sieht vor, dass in dem zweiten Behältnis kein thermochemisches Speichermaterial vorgesehen ist. Alternativ kann in diesem zweiten Behältnis natürlich auch thermochemisches Speichermaterial vorgesehen sein, was dann ebenfalls eine Freisetzung von Wasserdampf unter Zufuhr von Wärme zur Folge hätte.

Neben dem hier beschriebenen gasförmigen Reaktanden Wasser-dampf können auch andere gasförmige Stoffe, wie Ammoniak $NH_3$, Wasserstoff $H_2$ oder Kohlenstoffdioxid $CO_2$ eingesetzt werden.

In einer weiteren alternativen Ausführungsform kann auch im ersten Behältnis eine Kältesenke vorgesehen sein, die vergleichbar ausgebildet ist, wie die Kältesenke im zweiten Behältnis. Insbesondere dann, wenn in beiden Behältnissen thermochemische Speichermaterialien vorgesehen sind, kann eine solche Kältesenke im ersten Behältnis zur vorteilhaften Wärmeabfuhr dienen.

Gemäß einer weiteren bevorzugten Ausführungsform der Erfindung ist vorgesehen, dass das zweite Behältnis mit einem Wärmetauscher wärmetechnisch verschaltet ist, über welchen das zweite Behältnis mit Wärme, insbesondere mit Niedertemperaturwärme, versorgt werden kann. Eine solche Versorgung mit Niedertemperaturwärme ist beispielsweise eine Versorgung mit Wärme aus kraftwerkstechnischen Kühlwässern, oder Abwässern aus Industrieprozessen, wie auch Wärme aus einem Fernwärmenetz (Rücklauf an Fernwärmewasser). Alternativ oder zusätzlich hierzu kann natürlich auch das erste Behältnis mit einem Wärmetauscher versehen sein. Insbesondere dann, wenn in beiden Behältnissen thermochemisches Speichermaterial vorgesehen ist, ist eine solche Ausführungsform sinnvoll. Niedertemperaturwärme weist hierbei typischerweise ein Temperaturniveau von höchsten 150° C auf. Der ausführungsgemäße Wärmetauscher kann mitunter auch dazu vorgesehen sein, als Kältesenke zu arbeiten. Hierzu ist der Wärmetauscher mit entsprechender Kälteleistung zu versorgen.

Entsprechend einer weiteren vorteilhaften Ausführungsform des erfindungsgemäßen Kraftwerkssystems ist der thermochemische Speicher mit dem Wasser-Dampf-Kreislauf nicht nur wärmetechnisch sondern auch fluidtechnisch verschaltet. Insbesondere ist vorgesehen, dass Wasser bzw. Dampf aus dem Wasser-Dampf-Kreislauf entnommen werden kann, um dieses bzw. diesen dem thermochemischem Speicher zuzuleiten. Eine reine wärmetechnische Verschaltung sieht im Gegensatz zur ausführungsgemäßen fluidtechnischen Verschaltung keine Entnahme von Wasser- bzw. Dampf aus dem Wasser-Dampf-Kreislauf vor. Das so entnommene Wasser kann zudem auch als Reaktionsedukt vorgesehen sein, indem etwa der Wasserdampf mit einem thermochemischen Speichermaterial zur Wärmefreisetzung in direkten Kontakt gebracht wird. Da dieses Wasser aufgrund der Reinheit des in dem Wasser-Dampf-Kreislauf geführten Wassers ebenfalls kaum Verunreinigungen aufweist, eignet sich dieser Dampf besonders gut, um den thermochemischen Speicher mit Wasserdampf zu versorgen.

Entsprechend einer weiteren vorteilhaften Ausführungsform des erfindungsgemäßen Kraftwerkssystems ist der thermochemische Speicher mit dem Wasser-Dampf-Kreislauf nicht nur wärmetechnisch sondern auch indirekt fluidtechnisch verschaltet. In dieser Konfiguration wird beispielsweise Wasserdampf aus dem Wasser-Dampf-Kreislauf entnommen. Durch die Kondensation dieses Wasserdampfs wird Wärme freigesetzt, die zu einer Reaktion (Dissoziation) im ersten Behälter führt. Durch das System des thermo-chemischen Wärmespeichers wird dadurch Wärme in chemischer und/oder physikalischer Form gespeichert. Das kondensierte Wasser wird wieder in den Wasser-Dampf-Kreislauf zurückgeführt.

Entsprechend einer weiteren vorteilhaften Ausführungsform der Erfindung ist vorgesehen, dass der thermochemische Speicher eine Luftzuführung und eine Luftabführung aufweist, über welche Luftzuführung der thermochemische Speicher mit Luft versorgt werden kann, und über welche Luftabführung der thermochemische Speicher thermisch konditionierte Luft abgeben kann. Eine solche Abgabe erfolgt insbesondere zur Wärmeübertragung an den Wasser-Dampf-Kreislauf. Insofern dient die aufgenommene, wie auch abgegebene thermisch konditionierte Luft als Wärmeträgermedium, welches die aus dem thermochemischen Speicher abzuführende Wärme an den Wasser-Dampf-Kreislauf überträgt. Eine solche Wärmeübertragung mittels Luft ist weitgehend ungefährlich und kann auch in industrietechnischem Maßstab gut kontrolliert werden.

Luft wird hier und in der gesamten Beschreibung als Gasgemisch bezeichnet, das als Hauptkomponente Stickstoff enthält. Es kann daher sowohl Frischluft mit einem hohen Sauerstoffgehalt eingesetzt werden, als auch Abgas nach einem Verbrennungsprozess, bei dem die Sauerstoffkonzentration üblicherweise geringer ist und zudem Verbrennungsprodukte wie $CO_2$ enthalten sind.

Gemäß einer besonders bevorzugten Ausführungsform der Erfindung ist vorgesehen, dass der thermochemische Speicher zwischen den Wasser-Dampf-Kreislauf und die Wärmeerzeugungseinheit geschaltet ist. Diese Zwischenschaltung erlaubt verhältnismäßig kurze Wege bei der Wärmeübertragung, wodurch die Verlustleistungen gering sind. Zudem kann die Abwärme der Wärmeerzeugungseinheit weiterhin nach Wechselwirkung mit dem thermochemischen Speicher auch zusätzlich noch zur thermischen Konditionierung des Wassers in dem Wasser-Dampf-Kreislauf dienen.

Entsprechend einer weiteren vorteilhaften Ausführungsform ist vorgesehen, dass das Kraftwerkssystem Stellmittel aufweist, welche dazu ausgebildet sind, einen Wärmstrom ausgehend von der Wärmeerzeugungseinheit, insbesondere einen Abgasstrom der Wärmeerzeugungseinheit dem thermochemischen Speicher zuzuleiten, oder aber unter Umgehung des thermochemischen Speichers dem Wasser-Dampf-Kreislauf zuzuleiten. Diese Verschaltung ist besonders flexibel, da bei Bedarf Wärme dem thermochemischen Speicher zugeführt werden kann aber etwa bei bereits vollständiger Aufladung des thermochemischen Speichers, die Wärme unter Umgehung des thermochemischen Speichers direkt dem Wasser-Dampf-Kreislauf zugeleitet werden kann.

Weiter kann gemäß einer ebenfalls vorteilhaften Ausführungsform der Erfindung vorgesehen sein, dass das Kraftwerksystem derart ausgebildet ist, dass ein Wärmestrom ausgehend von der Wärmeerzeugungseinheit, insbesondere ein Abgasstrom der Wärmeerzeugungseinheit dem thermochemischen Speicher zugeleitet werden kann, wobei nach wärmetechnischer Wechselwirkung der Restwärmestrom bzw. entsprechend der Abgasstrom dem Wasser-Dampfkreislauf zugeleitet wird. Typischerweise wird aus dem Abgasstrom nur ein geringer Anteil an Wärme entnommen, um diesem dem thermochemischen Speicher zur Einspeicherung zuzuleiten. Der verbleibende Anteil im Abgasstrom kann insofern dem Wasser-Dampf-Kreislauf zur Dampfbereitung zugeführt werden. Insofern ist beispielsweise eine Aufladung des thermo-chemischen Speichers unter gleichzeitigem Betrieb des Wasser-Dampf-Kreislaufs möglich. Eine zeitliche Staffelung zwischen beiden kraftwerkstechnischen Prozessen ist insofern nicht erforderlich.

Gemäß einer ersten bevorzugten Ausführungsform des erfindungsgemäßen Verfahrens ist vorgesehen, dass während des thermischen Entladens des thermochemischen Speichers auf einem zweiten Temperaturniveau T2 keine Erzeugung von elektrischer Energie mittels der Stromerzeugungseinrichtung erfolgt. In anderen Worten heißt dies, dass die aus dem thermochemischen Speicher entnommene Wärme in erster Linie dem Warmhalten des Wasser-Dampf-Kreislaufs dient. Ausführungsgemäß wird also der Wasser-Dampf-Kreislauf durch kontinuierliche Wärmezufuhr aus dem thermochemischen Speicher auf einem Temperaturniveau gehalten, welches deutlich über dem Temperaturniveau bei Stillstand bzw. bei Stand-By des Kraftwerkssystems liegt. Ist in Folge von erhöhter elektrischer Energienachfrage es erforderlich, das Kraftwerkssystem zur Stromerzeugung anzufahren bzw. das in Teillast sich befindliche Kraftwerkssystem zur vermehrten Leistungsabgabe hochzufahren, kann dies in kürzerem Zeitraum erfolgen, da die thermischen Gradienten innerhalb des Wasser-Dampf-Kreislaufs deutlich geringer sind, als wenn der Wasser-Dampf-Kreislauf nicht mit Wärme aus dem thermochemischen Speicher versorgt worden wäre. Hierdurch sind also schnellere Lastwechsel des Kraftwerkssystems möglich.

Gemäß einer weiteren vorteilhaften Ausführungsform des erfindungsgemäßen Verfahrens ist vorgesehen, dass das Laden des thermochemischen Speichers durch Zuführen von Wärme aus einem Abgas der Wärmeerzeugungseinheit und/oder durch Zuführen von Wärme aus dem Wasser-Dampf-Kreislauf erfolgt. Bevorzugt kann durch Entnahme von Dampf aus einem Mitteldruckteil des Abhitzedampferzeugers Wärme aus dem Wasser-Dampf-Kreislauf ab und dem thermochemischen Speicher zugeführt werden. Der thermochemische Speicher kann insofern flexibel, je nach Betriebszustand des Kraftwerkssystems mit Wärme aus unterschiedlichen Quellen versorgt werden. Dies erhöht die Flexibilität des Kraftwerkssystems.

Gemäß einer weiteren bevorzugten Ausführungsform der Erfindung ist vorgesehen, dass das Entladen des thermochemischen Speichers unter Zufuhr von Wärme erfolgt, insbesondere von Niedertemperaturwärme auf einem Temperaturniveau von weniger als 150° C. Somit kann die Einbindung von weiterer Wärme, insbesondere von Niedertemperurwärme im Sinne einer thermo-chemischen Wärmepumpe durch den thermochemischen Speicher genutzt werden. Dies ist insbesondere auf einem Temperaturniveau möglich, welches andere kraftwerkstechnische Nutzungen der Wärme nicht mehr wirtschaftlich sinnvoll sein lässt.

Nachfolgend soll die Erfindung anhand von Figuren im Detail dargestellt werden. Hierbei ist darauf hinzuweisen, dass die

Figuren lediglich schematisch zu verstehen sind und keine Einschränkung hinsichtlich der Ausführbarkeit der Erfindung erlauben.

Weiter soll darauf hingewiesen werden, dass vorliegend die einzelnen in den Figuren aufgeführten technischen Merkmale für sich sowie auch in beliebiger Kombination miteinander beansprucht werden sollen, soweit die daraus resultierende Erfindung die der Erfindung zugrundeliegenden Aufgaben lösen kann.

Zusätzlich sei darauf hingewiesen, dass die in den Figuren mit gleichen Bezugszeichen versehenden technischen Merkmale gleiche technische Wirkungen bzw. Funktionen aufweisen.

Hierbei zeigen:

FIG 1 ein thermodynamisches Zustandsdiagramm zur Veranschaulichung der Reaktionen in einem als Wärmepumpe arbeitenden thermochemischen Speicher bei Laden und Entladen;

FIG 2 eine erste Ausführungsform des erfindungsgemäßen Kraftwerkssystems 1 in schematischer Schaltansicht;

FIG 3 eine weitere Ausführungsform des erfindungsgemäßen Kraftwerkssystems 1 in schematischer Schaltansicht;

FIG 4 eine weitere Ausführungsform des erfindungsgemäßen Kraftwerkssystems 1 in schematischer Schaltansicht;

FIG 5 eine flussdiagrammatische Darstellung einer Ausführungsform des erfindungsgemäßen Verfahrens zum Betrieb eines Kraftwerkssystems 1.

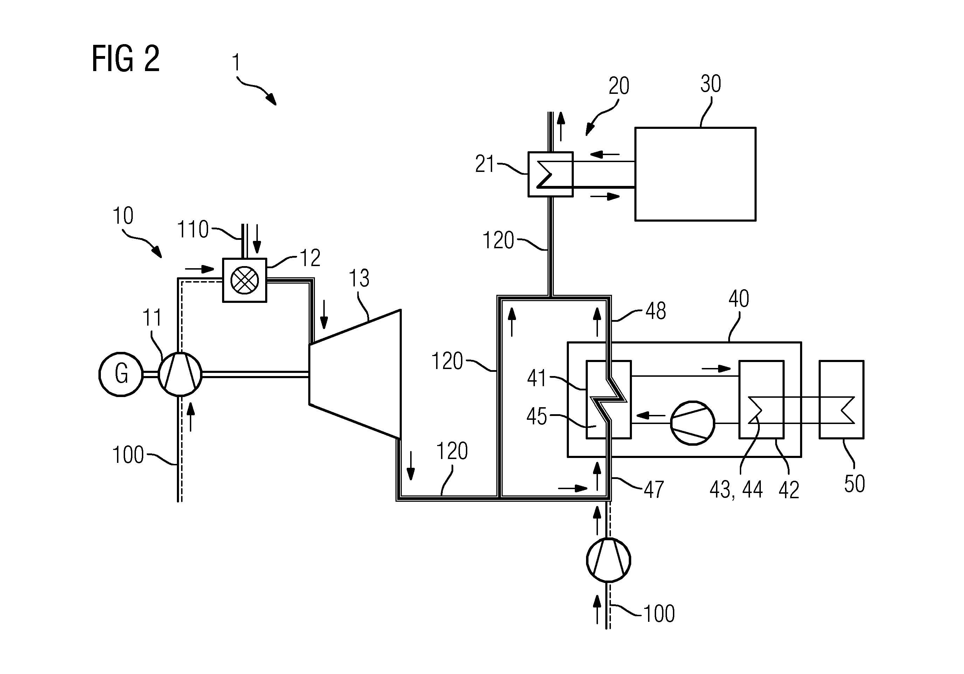

FIG 1 zeigt eine diagrammatische Darstellung des in Gleichung V (siehe oben!) dargestellten Verhältnisses von Temperatur (T) und Druck (p) bei Laden und Entladen eines thermochemischen Speichers 40 (wie etwa in FIG 2 dargestellt), welcher als Wärmepumpe arbeitet. Hierbei weist der thermochemische Speicher 40, wie oben bereits ausgeführt, zwei Behältnisse 41 und 42 auf, die jeweils mit thermochemischem Speichermaterial 45 und 46 versehen sind. Die Ladung des thermochemischen Speichers 40 erfolgt etwa auf einem Druckniveau $p_l$, wobei das erste Behältnis 41 mit Wärme auf einem Temperaturniveau $T_m$ versorgt wird (Punkt A). Durch die infolge dieser Wärmezufuhr freigesetzte Fluidmenge (Gasmenge) aus dem thermochemischen Speichermaterial 45 und die Zuleitung an das zweite Behältnis 42, sowie die darauf folgende Reaktion in dem zweiten Behältnis 42 (Punkt B) erfolgt eine Speicherung von thermischer Energie. Die Entladung des thermochemischen Speichers 40 erfolgt bei einem verhältnismäßig höheren Druck $p_h$, wobei Wärme dem zweiten Behältnis 42 auf einem Temperaturniveau $T_m$ zugeführt wird (Punkt C). Das dabei entstehende freie Fluid (Gas) wird dem ersten Behältnis 41 zugeleitet. Aufgrund der in Folge ablaufenden chemischen bzw. physikalischen Reaktionen in dem ersten Behältnis 41 erfolgt eine Wärmefreisetzung auf einem verhältnismäßig höherem Temperaturniveau $T_h$ (Punkt D). Weitere detaillierte Ausführungen sind aus den Ausführungen weiter oben zu entnehmen.

FIG 2 zeigt eine schematische Darstellung einer Ausführungsform eines erfindungsgemäßen Kraftwerkssystems 1, welches neben einer als Gasturbine ausgebildeten Wärmeerzeugungseinheit 10 eine Stromerzeugungseinrichtung 30 aufweist, die über einen Wasser-Dampf-Kreislauf 20 mit einem Abhitzedampferzeuger 21 wärmetechnisch verschaltet ist. Die Stromerzeugungseinrichtung 30 kann als Dampfteil mit einer Dampfturbine zur elektrischen Energieerzeugung ausgeführt sein. Insofern handelt es sich vorliegend um eine kombinierte Gas- und Dampfturbinenkraftwerksanlage.

Bei bestimmungsgemäßem Betrieb des Kraftwerkssystems 1 wird mittels des Kompressors 11, Luft 100 angesaugt, komprimiert und der Brennkammer 12 zugeführt, um sie zusammen mit Brennstoff 110 zu verfeuern. Das bei dieser Verbrennung entstehende Abgas wird an den Expander 13 zur mechanischen Arbeitsleistung bei gleichzeitiger Entspannung weitergeführt, wobei das Abgas 120 nach Entspannung über eine geeignete Leitungsführung dem Abhitzedampferzeuger 21 zum Wärmetausch zugeleitet wird. Der Abhitzedampferzeuger 21 ist dazu ausgebildet, die in dem Abgas 120 verbleibende Abwärme für die Dampfaufbereitung in dem Wasser-Dampf-Kreislauf 20 zu nutzen, um mittels der Stromerzeugungseinrichtung 30 die thermische Energie in elektrische Energie umwandeln zu können. Gleichzeitig kann eine Erzeugung von elektrischer Energie mittels der Wärmeerzeugungseinheit 10 erfolgen. Hierbei kann beispielsweise ein Generator (G) mit der als Gasturbine ausgebildeten Wärmeerzeugungseinheit 10 geeignet verschaltet sein.

Weiterhin weist das ausführungsgemäße Kraftwerkssystem 1 einen thermochemischen Speicher 40 auf, der mit dem Wasser-Dampf-Kreislauf 20 ebenfalls wärmetechnisch verschaltet ist. Konkret ist vorliegend der thermochemische Speicher 40 in die Leitungsführung zwischen Wärmeerzeugungseinheit 10 und Wasser-Dampf-Kreislauf 20 wärmetechnisch verschaltet. Insofern nimmt der thermochemische Speicher 40 auch auf die Wärmeübertragungsrate des Abgases 120 in dem Abhitzedampferzeuger 21 Einfluss.

An dieser Stelle soll darauf hingewiesen werden, dass eine wärmetechnische Verschaltung im Allgemeinen immer dann anzunehmen ist, wenn der Betrieb einer Komponente des Kraftwerksystems 1 Einfluss auf die Wärmebilanz einer weiteren Komponente direkt oder indirekt nimmt.

Der thermochemische Speicher 40 weist ein erstes Behältnis 41 sowie ein zweites Behältnis 42 auf, welche beide miteinander fluidtechnisch verschaltet sind. Zur Unterstützung der Fluidführung zwischen den beiden Behältnissen 41, 42 ist ein nicht weiter mit Bezugszeichen versehener Strömungsgenerator (Lüfter) vorgesehen. Ausführungsgemäß weist das erste Behältnis 41 ein thermochemisches Speichermaterial 45 auf, welches bei Übertragung von Wärme chemisch bzw. physikalisch dissoziiert. Ein insbesondere feststoffiges oder flüssiges Dissoziationsprodukt verbleibt in dem ersten Behältnis 41 zurück, wohingegen ein gasförmiges Dissoziationsprodukt mittels der Fluidverbindung zum zweiten Behältnis 42 geleitet wird. Ausführungsgemäß weist das zweite Behältnis 42 kein weiteres thermochemisches Speichermaterial auf, ist doch mit einem als Kältesenke 43 arbeitenden Wärmetauscher 44 verschaltet. Alternativ kann das zweite Behältnis 42 auch mit einem thermo-chemischen Speichermaterial versehen sein. Der Wärmetauscher 44 ist dazu ausgebildet, die thermische Wärme in dem zweiten Behältnis 42 nach Überführen des Dissoziationsproduktes von dem ersten Behältnis 41 an das zweite Behältnis 42 auf einen Wärmespeicher 50 zu übertragen. Ist das entsprechend überführte Dissoziationsprodukt beispielsweise Wasserdampf kann eine Kondensation des Wasserdampfes erfolgen, so dass in dem zweiten Behältnis 42 flüssiges Wasser angesammelt wird.

Ausführungsgemäß wird das erste Behältnis 41 des thermochemischen Speichers 40 durch thermisch konditioniertes Abgas 120 mit entsprechender Wärme zum Laden versorgt. Um etwa das Temperaturniveau geeignet einzustellen, kann das Abgas 120 mit einer geeigneten Menge an Luft 100 vermischt werden, um etwa eine Verminderung des Temperaturniveaus des Abgases 120 zu erreichen. Mitunter hierzu weist der thermochemische Speicher 40 eine Luftzuführung 47 sowie eine Luftabführung 48 auf, über welche der thermochemische Speicher 40 entsprechend mit Abgas 120 gemischt mit Luft 100 versorgt werden kann.

An dieser Stelle sei darauf hingewiesen, dass die Luftzuführung 47 grundsätzlich auch zur ausschließlichen Versorgung mit Abgas 120 geeignet sein kann.

Der thermochemische Speicher 40 ist vorliegend fluidtechnisch zwischen die Wärmeerzeugungseinheit 10 sowie den Wasser-Dampf-Kreislauf 20 geschaltet. Hierbei kann der Abgasstrom sowohl teilweise durch den thermochemischen Speicher 40 zur Wärmeübertragung geführt werden, oder aber auch an diesem vorbei in einer parallel dazu verlaufenden Teilleitung, so dass eine Wärmeversorgung des thermochemischen Speichers 40 unterbleiben kann. Eine derartige Parallelschaltung zweier Teilleitungen erhöht die Flexibilität des Einsatzes des thermochemischen Speichers 40.

Ist nun beispielsweise die Wärmeerzeugungseinheit 10 aufgrund von geringer Stromnachfrage nicht in Betrieb, so kann der Abhitzedampferzeuger 21 weiterhin mittels der aus dem thermo-chemischen Speicher 40 ausgekoppelten Wärme versorgt werden, um die thermischen Gradienten in dem Wasser-Dampf-Kreislauf 20 weitgehend gering zu halten. Hierzu kann nun das zweite Behältnis 42 aus dem Wärmespeicher 50 mit thermischer Energie versorgt werden, wobei der Wärmetauscher 44 als Wärmequelle dient. Die Zuführung dieser thermischen Energie ist ausreichend, um etwa das in dem zweiten Behältnis 42 angesammelte flüssige Wasser erneut zu verdampfen, so dass der erzeugte Dampf mittels des Strömungsgenerators wieder dem ersten Behältnis 41 zugeführt werden kann. Durch die Rekombinationsreaktion des thermochemischen Speichermaterials 45 in dem ersten Behältnis 41 mit dem Wasserdampf wird eine chemische bzw. physikalische Reaktion unterhalten, die eine hohe Wärmemenge erzeugt. Diese Wärme kann auf Luft 100 übertragen werden, welche dem thermochemischen Speicher 40 über die Luftzuführung 47 zugeleitet wird. Die Luft wird dabei durch den Lüfter 100 gefördert. Die so thermisch konditionierte Luft wird über die Luftabführung 48 aus dem thermochemischen Speicher 40 abgeleitet und dem Abhitzedampferzeuger 21 zugeführt. Demgemäß kann nun der mit dem Abhitzedampferzeuger 21 verschaltete Wasser-Dampf-Kreislauf 20 soweit mit Wärme versorgt werden, dass eine Abkühlung des Wasser-Dampf-Kreislaufs 20 unter eine vorbestimmte Temperaturgrenze nicht erfolgt. Damit kann gewährleistet werden, dass die thermischen Gradienten in dem Wasser-Dampf-Kreislauf 20 verhältnismäßig gering bleiben, so dass auch ein schnelles Anfahren der Stromerzeugungseinrichtung 30, die mit dem Wasser-Dampf-Kreislauf 20 verschaltet ist, ermöglicht werden kann. Dies erhöht deutlich die Flexibilisierung des vorliegenden Kraftwerkssystems 1.

An dieser Stelle sei darauf hingewiesen, dass der Wasser-Dampf-Kreislauf 20 die Komponenten des Abhitzedampferzeugers 21 mit umfasst, jedoch zur verbesserten Darstellung beide begrifflich getrennt werden.

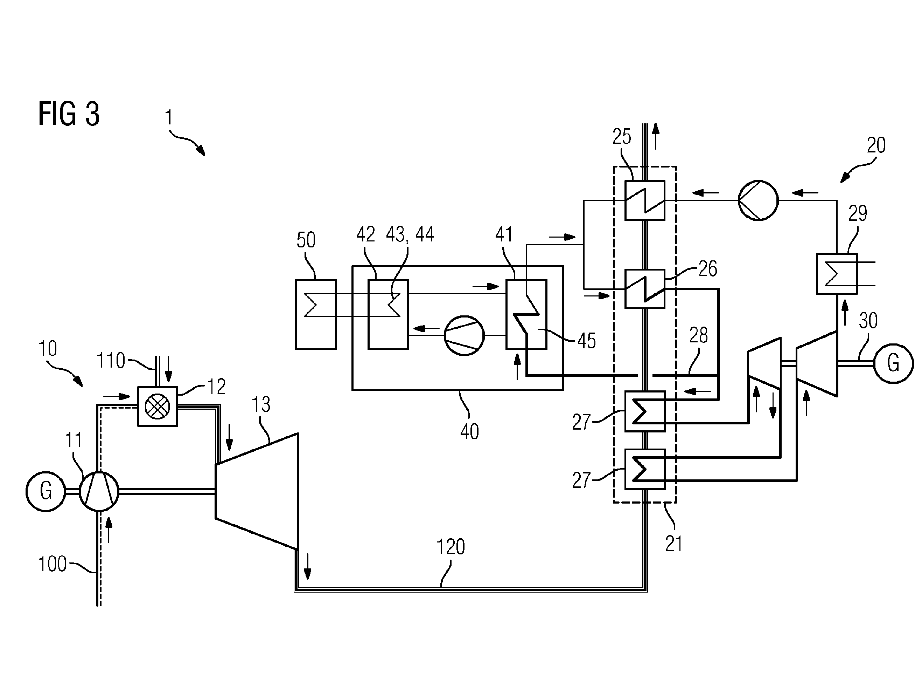

FIG 3 zeigt eine weitere Ausführungsform des erfindungsgemäßen Kraftwerkssystems 1 in schematischer Schaltansicht, welches sich von dem in FIG 2 gezeigten Kraftwerkssystem 1 lediglich dahingehend unterscheidet, dass nun die dem thermo-chemischen Speicher 40 zugeführte Wärme nicht dem Abgas 120 der als Gasturbine ausgebildeten Wärmeerzeugungseinheit 10 entnommen wird, sondern Dampf, welcher dem Wasser-Dampf-Kreislauf 20 in einem Mitteldruckteil entnommen wird. Der vorliegend gezeigte Abhitzedampferzeuger 21 umfasst neben einem Economizer 25, einem Verdampfer 26 auch zwei Überhitzer 27, die in dem Wasser-Dampf-Kreislauf 20 sequenziell verschaltet sind. Diese Ausführungsform des Wasser-Dampf-Kreislaufs stellt nur ein Beispiel dar, es sind beliebige weitere Ausführungsformen denkbar. Die mit dem Wasser-Dampf-Kreislauf verschaltete Stromerzeugungseinrichtung 30 ist als mit einem Generator G versehende Dampfturbine ausgebildet. Zur Kondensation des in dem Wasser-Dampf-Kreislauf 20 geführten Dampfes dient ein Kondensator 29.

Zum Laden des thermochemischen Speichers 40 wird nun bei Betrieb des Kraftwerkssystems 1 Dampf aus dem Wasser-Dampf-Kreislauf 20 zwischen dem Verdampfer 26 und dem ersten Überhitzer 27 entnommen. Dieser so entnommene Dampf wird dem ersten Behältnis 41 zugeführt, in welchem das thermochemische Speichermaterial 45 angeordnet ist. Durch die Kondensation des Dampfes wird Wärme freigesetzt, die an das Speichermaterial 45 abgegeben wird. Nach erfolgter Wärmeübertragung wird das Wasser erneut dem Wasser-Dampf-Kreislauf 20 im Bereich zwischen Economizer 25 und Verdampfer 26 zugeführt.

Die weiteren Funktionen des thermochemischen Speichers 40 bzw. des Kraftwerkssystems 1 entsprechen im Wesentlichen denen des in FIG 2 gezeigten thermochemischen Speichers 40 bzw. Kraftwerkssystems 1.

Die Funktionsweise der in FIG 2 und 3 gezeigten Kraftwerkssysteme sei nochmals anhand von weiter konkretisierten Ausführungsformen im Nachfolgenden im Einzelnen erklärt. Beide Ausführungsformen sind derart ausgestaltet, dass der thermochemische Speicher 40 den als Gasturbinen ausgebildeten Wärmeerzeugungseinheiten 10 nachgeschaltet ist. Im Normalbetrieb wird beispielsweise der thermochemische Speicher 40 nicht von Abgas 120 durchströmt. Soll der thermochemische Speicher 40 geladen werden, wird das Abgas 120 der Wärmeerzeugungseinheit 10 ganz bzw. teilweise durch den ersten Behälter 41 geleitet. Hierbei kommt es typischerweise zu einer Wärmeaufnahme bzw. einer geringfügigen Abkühlung des Abgases 120, etwa um ca. 50° C. Das aus dem thermochemischen Speicher 40 austretende Abgas kann weiterhin thermisch im Abhitzedampferzeuger 21 genutzt werden, wodurch die Erzeugungsleistung des Kraftwerkssystems 1 nur geringfügig gesenkt wird.

Gemäß einer konkreten Ausführungsform befindet sich im ersten Behältnis 41 Calciumhydroxid, welches jedoch nicht in direktem Kontakt mit dem Abgas steht. Aufgrund des Wärmeübertrags kommt es zur Dissoziationsreaktion gemäß Gleichung VI.

$$Ca(OH)_2 \leftrightarrow CaO + H_2O \qquad \text{(Gleichung VI)}$$

Hierbei wird Wasserdampf ($H_2O$) gebildet. Dieser Wasserdampf wird in das zweite Behältnis 42 geleitet. Die Leitung kann durch Unterstützung eines Strömungsgenerators erfolgen. In dem zweiten Behältnis 42 wird die Wärme an den Wärmetauscher 44 bzw. Kältesenke 43 abgeführt, wodurch der Wasserdampf kondensiert. Das Einbringen von Wärme in das erste Behältnis 41 erfolgt bei einem Temperaturniveau von etwa 550° C (Temperaturniveau des Abgases 120) vor. Die Kondensation von Wasser in dem zweiten Behältnis 42 kann unter Druck bei etwa 120° C erfolgen. Nach internen Abschätzungen der Anmelderin müssen für jede Megawattstunde thermische Energie, die in das erste Behältnis 41 durch Wärmeübertrag eingebracht werden, ca. 0,4 MWh an Wärme vom zweiten Behältnis 42 abgeführt werden. Diese Wärmeenergie kann im zweiten Behältnis 42 beispielsweise in einem als Niedertemperaturspeicher ausgebildeten Wärmespeicher 50 zwischengespeichert werden. Die Speicherung dieser Wärme ist nicht nur kostengünstig sondern es lassen sich auch große Speicherkapazitäten realisieren. Alternativ kann diese Wärme auch in den Niederdruckteil des Wasser-Dampf-Kreislaufs 20 erneut eingekoppelt werden. Dadurch können die Verluste durch das Laden des thermochemischen Speichersystems 40 vermindert werden.

Nach vollständiger Dissoziation von Calciumhydroxid in dem ersten Behältnis 41 liegt Calciumoxid vor und der thermochemische Speicher 40 ist vollständig geladen. Wir nun ein Gasaustausch zwischen den beiden Behältnissen 41 und 42 vermieden, kann die chemische Energie in dem ersten Behältnis 41 im Wesentlichen unbegrenzt lange ohne weitere Wärmeverluste gespeichert werden.

Wird die als Gasturbine ausgebildete Wärmeerzeugungseinheit 10 nicht weiter betrieben, kann der Energieinhalt des thermo-chemischen Speichers 40 genutzt werden, um den Wasser-Dampf-Kreislauf 20 auf einem erhöhten Temperaturniveau, bevorzugt auf Betriebstemperatur, zu halten. Dazu wird beispielsweise, wie vorab beschrieben, Wasser in dem zweiten Behältnis 42 verdampft und dem ersten Behältnis 41 mittels eines Strömungsgenerators zugeleitet. Alternativ ist es auch möglich, das erste Behältnis 41 direkt in den Abhitzedampferzeuger 21 zu integrieren, so dass auf den Strömungsgenerator verzichtet werden könnte. Mittels der aus dem Wärmespeicher 50 abgeführten Wärme kann das in dem zweiten Behältnis 42 kondensierte Wasser verdampft werden, wobei die Verdampfung in einem Temperaturbereich zwischen 60 und 150° C erfolgt. Insofern ist es auch möglich, zu diesem Zweck Wärme aus Niedertemperaturabwärmequellen zu entnehmen (z.B. Rücklauf des Fernleitungswärmenetzes, Abwärme eines Industrieprozesses). Bei Benutzung von weiteren Abwärmequellen kann auf einen Wärmespeicher 50 mitunter auch verzichtet werden. Nach Reaktion des in das erste Behältnis 41 überführten Wasserdampfes mit dem darin vorliegenden Calciumoxid als thermochemisches Speichermaterial 45 kommt es zu folgender Reaktion gemäß Gleichung VII:

$$CaO + H_2O \leftrightarrow Ca(OH)_2 \qquad \text{(Gleichung VII)}$$

Die Reaktion gemäß Gleichung VII ist stark exotherm, wodurch Wärme freigesetzt wird. Diese Wärme kann nun genutzt werden, um den Wasser-Dampf-Kreislauf 20 weiterhin mit Wärme zu versorgen. Bei einer angenommenen Verdampfungstemperatur von etwa 90° C in dem zweiten Behältnis 42, wird nach internen Abschätzungen der Anmelderin in den erstem Behältnis 41 Wärme auf einem Temperaturniveau von bis zu 500° C erzeugt. Für jede MWh, die in dem ersten Behältnis 41 an Energie freigesetzt wird, müssen ca. 0,4 MWh an das zweite Behältnis 42 zugeführt werden. Nach vollständiger Reaktion des Calciumoxides in dem ersten Behältnis 41 ist der Entladevorgang abgeschlossen.

Gemäß einer besonderen Ausführungsform des erfindungsgemäßen Verfahrens zum Betrieb des Kraftwerkssystem 1 erfolgt das Entnehmen von thermischer Energie aus dem ersten Behältnis 41 durch Entladen des thermochemischen Speichers 40 lediglich dann, wenn die als Gasturbine ausgebildete Wärmeerzeugungseinheit 10 nicht betrieben wird.

Gemäß einer weiteren konkreten Ausführungsform des erfindungsgemäßen Kraftwerkssystems 1 kann in dem ersten Behältnis 41 Magnesiumhydroxid bzw. Magnesiumoxid als thermochemisches Speichermaterial 45 vorgesehen sein. Gemäß einer solchen Ausführungsform ist es vorteilhaft, Wärme aus dem Wasser-Dampf-Kreislauf 20 auf einem geringerem Temperaturniveau zu entnehmen. Durch die Entnahme von Dampf im Bereich eines Mitteldruckteils eines Abhitzedampferzeugers 21 kann etwa Sattdampf in einem Temperaturbereich von 200°C bis 230°C entnommen werden. Durch Kondensation dieses Sattdampfes wird ausreichend Kondensationswärme frei, die in dem ersten Behältnis 41 die Zersetzung von Magnesiumhydroxid gemäß Gleichung VIII vorantreiben kann:

$$Mg(OH)_2 \rightarrow MgO + H_2O \qquad \text{(Gleichung VIII)}$$

Nach internen Abschätzungen der Anmelderin muss demnach für jede MWh, die in dem ersten Behältnis 41 gespeichert wird, etwa 0,5 MWh vom zweiten Behältnis 42 abgeführt werden.

Zum Warmhalten des Wasser-Dampf-Kreislaufs 20 kann der mit Magnesiumoxid gefüllte thermochemische Speicher durch Zufuhr von Niedertemperaturwärme an das zweite Behältnis 42 entladen werden. Diese Wärme bewirkt wiederum die Verdampfung von darin kondensiertem Wasser, welches zur Unterhaltung einer exothermen Reaktion nach Gleichung IX in das erste Behältnis 41 geleitet wird. Die Reaktionstemperatur beträgt etwa 230° C.

$$MgO + H_2O \rightarrow Mg(OH)_2 \qquad \text{(Gleichung IX)}$$

Bei Entladen des thermochemischen Speichers 40 erfolgt eine Wärmeübertragung auf Druckwasser aus dem Wasser-Dampf-Kreislauf 20, wobei die Flussrichtung im Vergleich zu der in FIG 3 gezeigten Flussrichtung umgekehrt sein kann. Dies ermöglicht ein Warmhalten des Wasser-Dampf-Kreislaufs 20 in einem Temperaturbereich von etwa bis zu 230° C.

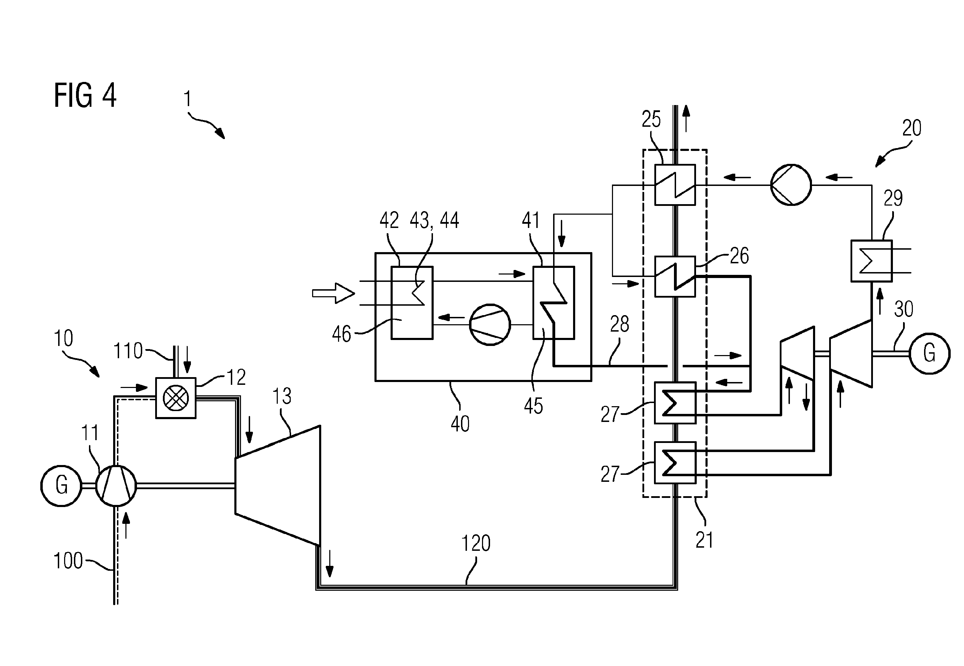

FIG 4 zeigt eine weitere Ausführungsform des erfindungsgemäßen Kraftwerkssystems 1, welches vergleichbar zu der in FIG 3 gezeigten Ausführungsform mit dem Wasser-Dampf-Kreislauf 20 fluidtechnisch verschaltet ist. Anders jedoch als in den vorhergehenden konkreten Ausführungsformen ist nicht nur das erste Behältnis 41 mit einem thermochemischen Speichermaterial 45 angefüllt, sondern auch das zweite Behältnis 42 mit einem zweiten thermochemischen Speichermaterial 46. Eine solche Ausführungsform ist insbesondere dann vorteilhaft, wenn etwa Abwärme in einem Niedertemperaturbereich vorliegt, die zum Betrieb des thermochemischen Speichers 40 im Sinne einer thermochemischen Wärmepumpe genutzt werden kann.

Beispielsweise befindet sich in dem zweiten Behältnis 42 Kupferhydroxid, welches durch Zufuhr von Wärme unter Bildung von Wasserdampf dissoziiert. In dem ersten Behältnis 41 befindet sich beispielsweise Magnesiumoxid, welches das so freigesetzte Wasser erneut aufnehmen kann. Die dabei ablaufende Reaktion in dem ersten Behältnis 41 ist stark exotherm, wie oben bereits ausgeführt. Insofern vermag die Ausführungsform Abwärme auf einem verhältnismäßig geringem Temperaturniveau zwischen 100 und 160°C, die an das zweite Behältnis 42 zugeführt wird, auf ein höheres Temperaturniveau anzuheben, welches in dem ersten Behältnis 41 etwa bei 230° C liegt. Zudem werden für jede MWh die als Abwärme an das zweite Behältnis 42 bereitgestellt wird, bis zu 1,5 MWh auf dem höheren Temperaturniveau in dem ersten Behältnis 41 freigesetzt.

Nach vollständigem Ablaufen der Reaktion beim Entladen des thermochemischen Speichers 40 befindet sich in dem ersten Behältnis 41 im Wesentlichen ausschließlich Magnesiumhydroxid und in dem zweiten Behältnis 42 Kupferoxid. Zum Laden des thermochemischen Speichers 40 kann wiederum Wärme aus dem Wasser-Dampf-Kreislauf 20 entnommen werden. Gleichzeitig ist es erforderlich, das zweite Behältnis 42 durch entsprechende Wärmeabfuhr zu kühlen. Hierbei ist eine Temperatur von etwa 30°C sinnvoll. Beim Laden kommt es im ersten Behältnis 41 aufgrund der Wärmeübertragung bei etwa 140°C zu einer Zersetzung des Magnesiumhydroxids. Das dabei freiwerdende Wasser wird nach Transport in das zweite Behältnis 42 durch die Reaktion gemäß Gleichung X gebunden:

$$CuO + H_2O \rightarrow Cu(OH)_2 \qquad \text{(Gleichung X)}$$

Für jede MWh an Abwärme, die dem ersten Behältnis zugeführt wird, ist eine Wärmemenge von ca. 0,6 MWh durch die Kühlung aufzunehmen. Die dabei abgeführte Wärme kann wiederum geeignet in einem nicht weiter gezeigten Wärmespeicher zwischengespeichert werden. Der Ladevorgang ist dann abgeschlossen, wenn das in dem ersten Behältnis 41 gebundene Wasser im Wesentlichen vollständig ausgetrieben ist.

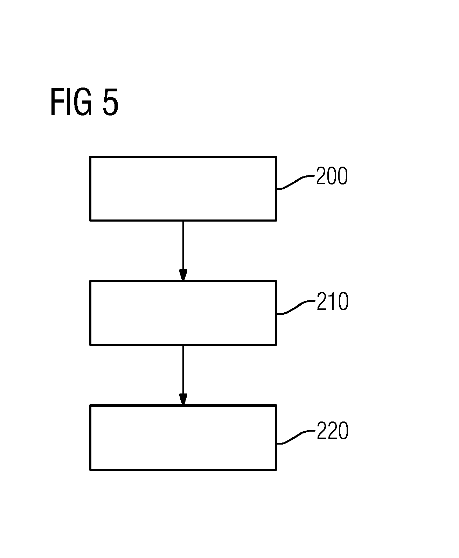

FIG 5 zeigt eine Ausführungsform des erfindungsgemäßen Verfahrens zum Betrieb eines vorab beschriebenen Kraftwerkssystems 1, welches folgende Schritte umfasst:

- Laden des thermochemischen Speichers 40 durch Zuführen von Wärme auf einem ersten Temperaturniveau T1 an den thermochemischen Speicher 40 (erster Verfahrensschritt 200) ;
- Zeitliches Speichern wenigstens eines Teils dieser Wärme in dem thermochemischen Speicher 40 in chemischer und/oder physikalischer Form (zweiter Verfahrensschritt 210);
- Entladen des thermochemischen Speichers 40 auf einem zweiten Temperaturniveau T2 und Abführen von Wärme aus diesem unter Übertragung von Wärme an den Wasser-Dampf-Kreislauf 20 (dritter Verfahrensschritt 220);

Weitere Ausführungsformen ergeben sich aus den Unteransprüchen.

**Patentansprüche**

1. Kraftwerksystem (1), umfassend eine Wärmeerzeugungseinheit (10) zur Bereitstellung von thermischer Energie, einen Wasser-Dampf-Kreislauf (20), welcher mit der Wärmeerzeugungseinheit (10) wärmetechnisch verschaltet ist, eine Stromerzeugungseinrichtung (30), welche durch die in dem Wasser-Dampf-Kreislauf (20) geführte thermische Energie zur Stromerzeugung energetisiert werden kann, sowie einen thermochemischen Speicher (40), welcher mit dem Wasser-Dampf-Kreislauf (20) ebenfalls wärmetechnische verschaltet ist.

2. Kraftwerksystem gemäß Anspruch 1,
   **dadurch gekennzeichnet, dass** auch die Wärmeerzeugungseinheit (10) wärmetechnisch mit dem thermochemischen Speicher (40) verschaltet ist.

3. Kraftwerksystem gemäß einem der vorhergehenden Ansprüche,
   **dadurch gekennzeichnet, dass** der thermochemische Speicher (40) wenigstens zwei Behältnisse (41, 42) aufweist, die fluidtechnisch miteinander verschaltet sind, wobei in einem ersten Behältnis (41) ein thermochemisches Speichermaterial (45) angeordnet ist.

4. Kraftwerksystem gemäß einem der vorhergehenden Ansprüche,
   **dadurch gekennzeichnet, dass** das in dem ersten Behältnis (41) angeordnete thermochemische Speichermaterial (45) ein Metall-Oxid und/oder ein MetallHydroxid umfasst.

5. Kraftwerksystem gemäß Anspruch 3 oder 4,
   **dadurch gekennzeichnet, dass** auch in dem zweiten Behältnis (42) ein thermochemisches Speichermaterial (46) angeordnet ist, wobei insbesondere das in dem zweiten Behältnis (42) angeordnete thermochemische Speichermaterial (45) nicht identisch ist mit dem in dem ersten Behältnis (41) angeordnete thermochemische Speichermaterial (45).

6. Kraftwerksystem gemäß Anspruch 3 bis 5,
   **dadurch gekennzeichnet, dass** in dem zweiten Behältnis (42) eine Kältesenke (43) vorgesehen ist, deren Kälteleistung bei Betrieb des thermochemischen Speichers insbesondere erlaubt, dampfförmiges Wasser zu kondensieren.

7. Kraftwerksystem gemäß Anspruch 3 bis 6,
   **dadurch gekennzeichnet, dass** das zweite Behältnis (42) mit einem Wärmetauscher (44) wärmetechnisch verschaltet ist, über welchen das zweite Behältnis (42) mit Wärme, insbesondere mit Niedertemperaturwärme versorgt werden kann.

8. Kraftwerksystem gemäß einem der vorhergehenden Ansprüche,
   **dadurch gekennzeichnet, dass** der thermochemische Speicher (40) mit dem Wasser-Dampf-Kreislauf (20) nicht nur wärmetechnisch sondern auch fluidtechnisch verschaltet ist.

9. Kraftwerksystem gemäß einem der vorhergehenden Ansprüche,
   **dadurch gekennzeichnet, dass** der thermochemische Speicher (40) eine Luftzuführung (47) und eine Luftabführung (48) aufweist, über welche Luftzuführung (47) der thermochemische Speicher (40) mit Luft versorgt werden kann, und über welche Luftabführung (47) der thermochemische Speicher (40) thermisch konditionierte Luft abgeben kann.

10. Kraftwerksystem gemäß einem der vorhergehenden Ansprüche,
    **dadurch gekennzeichnet, dass** der thermochemische Speicher (40) zwischen den Wasser-Dampf-Kreislauf (20) und die Wärmeerzeugungseinheit (10) geschaltet ist.

11. Kraftwerksystem gemäß einem der vorhergehenden Ansprüche,
    **dadurch gekennzeichnet, dass** das Kraftwerksystem (1) Stellmittel (15) aufweist, welche dazu ausgebildet sind, einen Wärmestrom ausgehend von der Wärmeerzeugungseinheit (10), insbesondere einen Abgasstrom der Wärmeerzeugungseinheit (10) dem thermochemischen Speicher (40) zuzuleiten, oder aber unter Umgehung des thermochemischen Speichers (40) dem Wasser-Dampf-Kreislauf (20) zuzuleiten.

12. Kraftwerksystem gemäß einem der vorhergehenden Ansprüche,
    **dadurch gekennzeichnet, dass** das Kraftwerksystem (1) derart ausgebildet ist, dass ein Wärmestrom ausgehend von der Wärmeerzeugungseinheit (10), insbesondere ein Abgasstrom der Wärmeerzeugungseinheit (10) dem thermochemischen Speicher (40) zugeleitet werden kann, wobei nach wärmetechnischer Wechselwirkung der Restwärmestrom bzw. entsprechend der Abgasstrom dem Wasser-Dampf-Kreislauf (20) zugeleitet wird.

13. Verfahren zum Betrieb eines Kraftwerksystems (1) gemäß einem der vorhergehenden Ansprüche, welches folgende Schritte umfasst:

    - Laden des thermochemischen Speichers (40) durch Zuführen von Wärme auf einem ersten Temperaturniveau (T1) an den thermochemischen Speicher (40);
    - Zeitliches Speichern wenigstens eines Teils dieser Wärme in dem thermochemischen Speicher (40) in chemischer Form;
    - Entladen des thermochemischen Speichers (40) auf einem zweiten Temperaturniveau (T2) und Abführen von Wärme aus diesem unter Übertragung von Wärme an den Wasser-Dampf-Kreislauf (20).

14. Verfahren gemäß Anspruch 13,
    **dadurch gekennzeichnet, dass** während des thermischen Entladens des thermochemischen Speichers (40) auf einem zweiten Temperaturniveau (T2) keine Erzeugung von elektrischer Energie mittels der Stromerzeugungseinrichtung (30) erfolgt.

15. Verfahren gemäß einem der vorhergehenden Ansprüche 12 bis 14,
    **dadurch gekennzeichnet, dass** das Entladen des thermochemischen Speichers (40) unter Zufuhr von Wärme erfolgt, insbesondere von Niedertemperaturwärme auf einem Temperaturniveau von weniger als 150°C.

FIG 1

FIG 2

EP 2 796 671 A1

FIG 3

FIG 4

EP 2 796 671 A1

FIG 5

Europäisches
Patentamt

European
Patent Office

Office européen
des brevets

**EUROPÄISCHER RECHERCHENBERICHT**

Nummer der Anmeldung

EP 13 16 5605

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2010/263832 A1 (DALLA BETTA RALPH A [US]) 21. Oktober 2010 (2010-10-21) <br> * Absätze [0006] - [0008], [0022] - [0028]; Abbildungen 1-10 * <br> * Absatz [0031] * <br> * Absätze [0040], [0041] * <br> ----- | 1-7,10, 11,13-15 | INV. <br> F01K3/12 <br> F01K3/18 <br> F01K13/02 <br> F28D20/00 |
| X | US 5 127 470 A (INABA YOSHIAKI [JP] ET AL) 7. Juli 1992 (1992-07-07) <br><br> * Spalte 2, Zeile 61 - Spalte 6, Zeile 16; Abbildungen 1-4,11 * <br> ----- | 1-4,6, 8-10,12, 13 | |
| X | FR 2 577 614 A1 (CENTRE NAT RECH SCIENT [FR]) 22. August 1986 (1986-08-22) <br> * Seite 4, Zeile 24 - Seite 7, Zeile 10; Abbildung 1 * <br> ----- | 1 | |

RECHERCHIERTE
SACHGEBIETE (IPC)

F01K
F28D

Der vorliegende Recherchenbericht wurde für alle Patentansprüche erstellt

| Recherchenort | Abschlußdatum der Recherche | Prüfer |
|---|---|---|
| München | 24. Oktober 2013 | Röberg, Andreas |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**           EP 13 16 5605

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-10-2013

| Im Recherchenbericht angeführtes Patentdokument | Datum der Veröffentlichung | Mitglied(er) der Patentfamilie | Datum der Veröffentlichung |
|---|---|---|---|
| US 2010263832 A1 | 21-10-2010 | US 2010263832 A1<br>WO 2010120652 A1 | 21-10-2010<br>21-10-2010 |
| US 5127470 A | 07-07-1992 | CN 1049409 A<br>DE 4025421 A1<br>JP H086608 B2<br>JP H0370846 A<br>US 5127470 A | 20-02-1991<br>28-02-1991<br>29-01-1996<br>26-03-1991<br>07-07-1992 |
| FR 2577614 A1 | 22-08-1986 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012150969 A1